# FASCICULE DE BREVET EUROPEEN

(11) **EP 0 554 136 B1**
(45) Date de publication et mention de la délivrance du brevet: **15.04.1998**
(21) Numéro de dépôt: 93400099.3
(22) Date de dépôt: 18.01.1993
(51) Int. Cl.: G06K 9/20, H01B 7/36

(54) **Dispositif pour l'identification d'un conducteur électrique**
Vorrichtung zum Erkennen elektrischer Kabel
Device for identifying electrical cables

(30) Priorité: 30.01.1992 FR 9201030
(43) Date de publication de la demande: 04.08.1993
(73) Titulaire: EUROCOPTER, F-13725 Marignane Cédex (FR)
(72) Inventeur: Cerda, Léon Germain, F-13620 Carry le Rouet (FR)
(74) Mandataire: Bonnetat, Christian

(56) Documents cités:
- US-A- 3 856 377
- US-A- 4 376 582
- US-A- 4 764 879

## Description

La présente invention concerne un dispositif pour la lecture de repères d'identification inscrits de façon échelonnée sur la surface externe d'une portion longitudinale de la gaine d'un conducteur électrique.

On sait que les pièces de câblage électriques, notamment pour hélicoptères ou avions, comportent un grand nombre de connecteurs et de conducteurs. Il est donc avantageux de mettre en oeuvre un système automatisé facilitant l'élaboration industrielle de tels câblages. En vue de l'automatisation de la fabrication de telles pièces de câblage, généralement appelées harnais, chaque connecteur, qui comporte une pluralité d'emplacements de connexion, est identifié par des repères, et il en est de même de chacun de ses emplacements de connexion. Par ailleurs, chaque conducteur électrique est lui-même identifié par des repères.

Ainsi, en faisant connaître au système automatisé de câblage les repères d'un conducteur électrique, ce système indique le connecteur et, plus particulièrement, l'emplacement de connexion de ce dernier, auquel doit être relié ledit conducteur électrique.

Les repères d'identification d'un conducteur sont généralement constitués par des groupes de signes, comme des chiffres et/ou des lettres, imprimés de façon échelonnée sur la surface externe de la gaine isolante dudit conducteur, notamment aux extrémités de celui-ci. Ainsi, un opérateur lit lesdits repères d'identification d'un conducteur et les introduit dans le système automatisé, qui lui fournit l'adresse de l'emplacement de connexion correspondant du connecteur concerné.

Un tel processus est long et fastidieux. De plus, il n'est pas très fiable, car il est fatiguant pour l'opérateur qui doit lire des repères de petite dimension de façon répétitive au cours d'une journée de travail.

Pour pouvoir rendre automatique la saisie de l'identification d'un conducteur électrique par le système automatisé, on a pensé à utiliser un code barre. Un tel code barre est soit imprimé sur le conducteur à la suite desdits repères constitués de lettres et de chiffres, soit porté par une étiquette fixée audit conducteur.

Il va de soi que l'utilisation d'un tel code barre nécessite des impressions nouvelles et entraîne des pertes de temps. De plus, les étiquettes sont gênantes lors des opérations de branchement sur les connecteurs.

Aussi, il serait avantageux de pouvoir saisir automatiquement et directement les repères de lettres et/ou de chiffres des conducteurs. Cependant, cela soulève de nombreuses difficultés techniques, d'une part parce que lesdits repères ne se trouvent que sur une partie de la périphérie de la gaine du conducteur, difficile à présenter de façon sûre à un lecteur automatique, et, d'autre part, parce que ladite gaine peut être vrillée autour du conducteur.

Un appareil de lecture de lettres ou chiffres d'identification sur une barre de combustible nucléaire est divulgué par US-A-4376582. Cet appareil comprend d'une part, un ensemble d'éclairement et une caméra fixes et d'autre part, un ensemble de prismes tournants. La rotation des prismes permet d'obtenir une image périphérique complète de la portion illuminée de la barre. L'ensemble de prismes est toutefois relativement complexe.

La présente invention a pour but de remédier à ces inconvénients.

A cette fin, le dispositif selon l'invention est défini à la revendication 1.

Ainsi, grâce à l'invention, on met à plat artificiellement la portion de gaine du conducteur portant les signes d'identification, de sorte qu'il est aisé de reconnaître lesdits signes et de déterminer l'identification du conducteur, par exemple par un dispositif informatisé connu de reconnaissance de caractères.

De préférence, afin de remédier aux inconvénients du vrillage possible de la gaine, la rotation de l'ensemble d'éclairement et de la caméra autour de ladite portion longitudinale de gaine s'effectue sur plus de 360°, par exemple sur 380°. Ainsi, même si la suite des signes n'est pas centrée par rapport à la ligne initiale de lecture ou bien n'est pas rigoureusement parallèle à une génératrice de ladite gaine, l'image donnée par ladite caméra englobe la totalité desdits signes.

Avantageusement, afin d'imposer un minimum de rectitude à ladite portion longitudinale de gaine et donc de faciliter la lecture desdits repères, on prévoit un guide tubulaire fixe transparent dans lequel ladite portion longitudinale de gaine est introduite avec jeu.

Dans un mode de réalisation avantageux, le dispositif conforme à la présente invention comporte :
- un bâti fixe ;
- un rotor portant ledit ensemble d'éclairement et ladite caméra et monté à rotation sur ledit bâti fixe à l'aide de paliers de rotation ; et
- des moyens moteurs pour entraîner en rotation ledit rotor par rapport audit bâti ;
- ledit guide tubulaire transparent étant solidaire dudit bâti au niveau desdits paliers de rotation.

Des moyens sont avantageusement prévus pour fixer longitudinalement ledit conducteur dans ledit tube de guidage.

Lorsque, comme cela est usuel, lesdits repères sont portés par la partie d'extrémité du conducteur, au moins un détecteur de l'extrémité dudit conducteur est prévu à l'extrémité dudit guide transparent opposée à celle à travers laquelle est introduit ledit conducteur. Un tel détecteur peut commander lesdits moyens de fixation longitudinale du conducteur dans le guide transparent et/ou lesdits moyens moteurs de rotation.

De préférence, la rotation dudit rotor est réversible. Ainsi, après la lecture des repères par rotation dans un sens, le rotor est ramené en position initiale par rotation en sens inverse. Il en résulte qu'il n'est pas nécessaire de prévoir un collecteur tournant entre la caméra et le système d'exploitation des images qui en sont issues : il suffit de prévoir une liaison suffisamment souple pour permettre l'amplitude de rotation de lecture du rotor.

Les figures du dessin annexé feront bien comprendre comment l'invention peut être réalisée. Sur ces figures, des références identiques désignent des éléments semblables.

La figure 1 montre, à échelle agrandie, la partie d'extrémité d'un conducteur.

La figure 2 est une vue schématique, en coupe, d'un dispositif conforme à la présente invention.

Les figures 3 et 4 illustrent la lecture obtenue par le dispositif de l'invention, dans deux cas possibles de positionnement de repères d'identification.

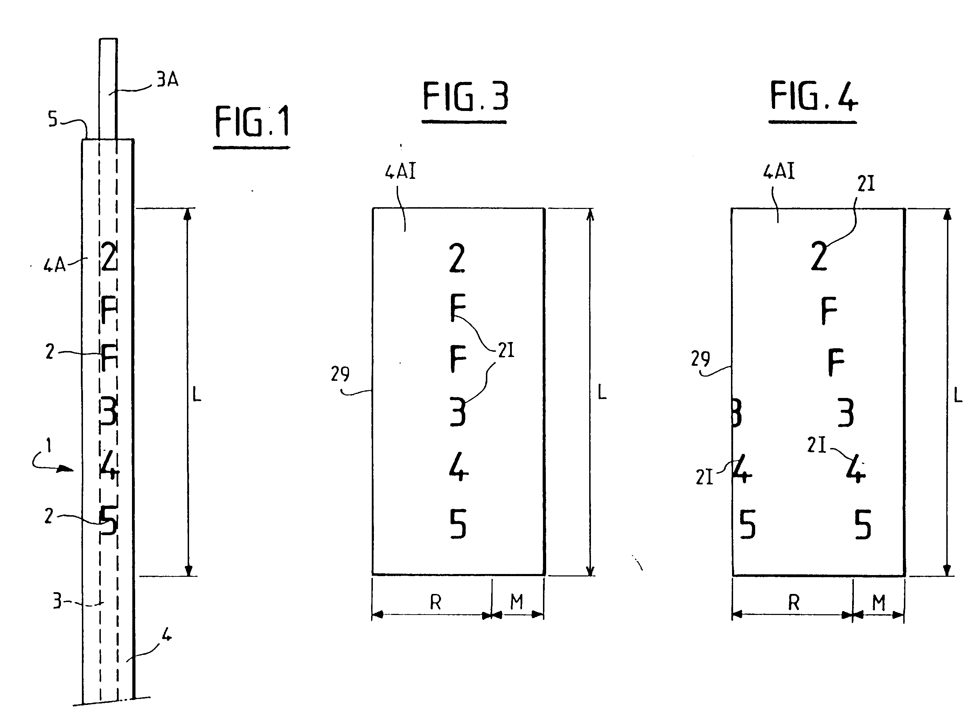

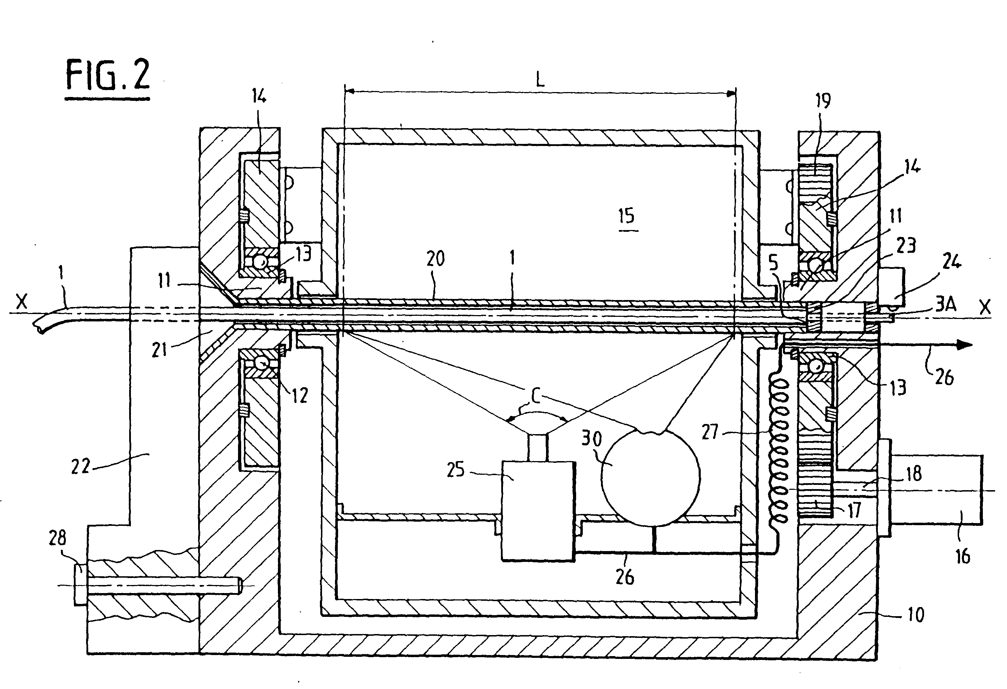

La portion d'extrémité 1 de conducteur électrique, montrée par la figure 1, comporte un groupe de signes 2 formant un repère d'identification dudit câble. Ce câble, de façon usuelle, est constitué par une âme conductrice 3 enrobée dans une gaine isolante 4. Sur la figure 1, la partie extrême de la gaine 4 a été éliminée de sorte que l'extrémité 3A de l'âme 3 est apparente et qu'un épaulement 5 est formée entre cette partie d'âme dénudée 3A et la gaine 4.

Comme on peut le voir, les signes 2 --composés par exemple de lettres et de chiffres-- sont inscrits longitudinalement les uns à la suite des autres sur la surface externe de la portion d'extrémité de la gaine 4. Plus précisément, les signes 2 sont au moins approximativement alignés le long d'une génératrice de ladite portion de gaine 4 et le groupe desdits signes est compris à l'intérieur d'une portion longitudinale 4A de ladite gaine, de longueur L.

Le dispositif de lecture, conforme à la présente invention et montré schématiquement en coupe sur la figure 2, comporte un bâti 10 pourvu de deux paliers alignés 11 définissant un axe X-X. A chacun desdits paliers 11 est associé un roulement 12 dont la couronne intérieure 13 est solidaire dudit palier. Les couronnes extérieures des roulements 12 sont solidaires de couronnes périphériques 14, elles-mêmes solidaires d'un rotor 15, susceptible de tourner autour de l'axe X-X.

Par ailleurs, un moteur électrique 16 porté par le bâti 10 est susceptible d'entraîner ledit rotor 15 en rotation autour de l'axe X-X, grâce à un pignon 17, calé sur l'arbre 18 et engrénant avec une denture 19, portée par la périphérie de la couronne extérieure 14 d'un des deux roulements 12.

Un tube rigide et transparent 20, disposé coaxialement à l'axe X-X, relie lesdits paliers 11 et est solidaire du bâti 10, de façon que ledit rotor 15 tourne autour dudit tube rigide fixe 20.

A une extrémité du tube 20 sont prévus un élargissement d'introduction 21, ainsi qu'un dispositif 22 pour le blocage en translation dudit conducteur. Le dispositif 22, représenté très schématiquement, peut être de tout type connu, par exemple il peut être constitué par une pince à deux mors dont chacun pivote autour d'un axe 28 lié au bâti 10. L'ouverture et la fermeture des pinces du dispositif 22 sont commandées par des moyens électriques, par exemple un électro-aimant (non représenté).

A l'autre extrémité du tube 20 sont disposés un détecteur de butée 23 et un détecteur de présence 24.

Par ailleurs, à l'intérieur du rotor 15 sont montés un dispositif d'éclairement 30 et une caméra 25 solidaires en rotation dudit rotor autour de l'axe X-X. Cette caméra 25 est apte à recevoir l'image d'une ligne parallèle à l'axe X-X. Elle est avantageusement du type CCD et elle est reliée à l'extérieur du dispositif par une liaison filaire 26, présentant une zone 27 de grande souplesse d'allongement entre le rotor 15 et le bâti 10.

Le champ C de ladite caméra 25 embrasse, au niveau de l'axe X-X, une longueur au moins égale à la longueur L de la portion de gaine 4A sur laquelle est inscrit le groupe des signes d'identification 2.

Le dispositif de la figure 2 fonctionne de la façon suivante.

Les mors du dispositif 22 étant écartés l'un de l'autre, l'élargissement 21 est dégagé et on peut y introduire l'extrémité 1 du câble 3,4. Cette extrémité 1 est poussée dans le tube 20 jusqu'à ce que l'épaulement 5 vienne en butée contre le détecteur 23 et que l'extrémité de la partie d'âme dénudée 3A soit en regard du détecteur 24. Dans cette position, la portion 4A de la gaine 4 est embrassée par le champ C de la caméra 25. De plus, les détecteurs 23 et 24 actionnent, d'une part, les moyens de commande des pinces 22, qui se rapprochent l'une de l'autre pour presser entre elles la portion d'extrémité 1, la bloquant en translation dans le tube 20 et, d'autre part, le moteur 16.

Par suite, le rotor 15 est entraîné, à partir de sa position initiale, en rotation par le moteur 16 autour de l'axe X-X, le dispositif d'éclairement 30 est actionné, et la caméra 25 peut former, ligne par ligne, l'image 4AI du tronçon 4A comportant les images 2I des signes 2 (voir la figure 3 qui montre l'image 4AI sous forme développée).

Cette image est transmise à un système informatisé d'exploitation et de lecture (non représenté) extérieur au dispositif de lecture 10 à 25, par l'intermédiaire de la liaison filaire 26, dont la partie souple 27 permet la rotation du rotor 15 par rapport au bâti 10. Ledit système d'exploitation et de lecture identifie donc le câble 3,4.

Cette identification peut être utilisée par le système automatisé de câblage qui indiquera alors le connecteur et l'emplacement de connexion de celui-ci, auquel la partie d'âme dénudée 3A doit être reliée. Elle peut être également utilisée pour piloter toute autre intervention automatisée ou non sur ledit câble 3,4, ainsi identifié.

Sur la figure 3, on suppose que les signes 2 étaient alignés longitudinalement le long d'une génératrice de la gaine 4 et que la ligne 29 de début de lecture par la caméra 25 était à l'extérieur du groupe desdits signes. Il en résulte que, sur l'image 4AI, les images 25 sont alignées et apparaissent en entier.

Toutefois, il se pourrait que la ligne 29 de début de lecture par la caméra 25 coupe lesdits signes 2, ou bien (voir la figure 4) que la gaine 4 soit vrillée autour de l'âme 3, de sorte que les signes 2 seraient décalés angulairement les uns par rapport aux autres autour de ladite âme. Pour obtenir une image complète desdits signes, selon une caractéristique de la présente invention, la course rotative de lecture de la caméra 25 autour du tronçon 4A est supérieure à 360°. Sur les figures 3 et 4, on a indiqué par R le développement correspondant à une course de lecture de 360° et par M une marge supplémentaire, par exemple de l'ordre d'une vingtaine de degrés.

Grâce à cette disposition, on est sûr d'obtenir sur l'image 4AI la totalité des images 2I non coupées de tous les signes 2 du groupe d'identification.

La course de lecture R+M du rotor 15 est limitée, par exemple par un commutateur de butée (non représenté) disposé sur le bâti fixe 10 et coopérant avec une butée portée par le rotor 15. Ce commutateur de butée commande l'inversion du sens de rotation du moteur 16, de sorte qu'après la phase de lecture des signes 2 décrite ci-dessus, le rotor 15 est ramené en position initiale.

Le retour en position initiale commande l'ouverture des mors du dispositif 22, de sorte que le câble 3,4 peut être sorti du tube 20.

Un autre processus de lecture peut alors être réalisé.

## Revendications

1. Dispositif pour la lecture de repères d'identification d'un conducteur électrique (3,4), constitués par au moins un groupe de signes (2) inscrits longitudinalement les uns à la suite des autres sur la surface externe d'une portion longitudinale (4A) d'une gaine (4) dudit conducteur électrique, le dispositif comportant un ensemble d'éclairement (30) et une caméra (25) aptes à former l'image d'une ligne longitudinale de la surface externe de ladite portion longitudinale de gaine (4A),
le dispositif étant caractérisé en ce que l'ensemble d'éclairement et la caméra sont aptes à tourner autour de ladite portion longitudinale de gaine (4A) pour former, ligne longitudinale par ligne longitudinale, l'image périphérique complète (4AI) de la surface externe de ladite portion longitudinale de gaine (4A).

2. Dispositif selon la revendication 1,
caractérisé en ce que la rotation de l'ensemble d'éclairement (30) et de la caméra (25) autour de ladite portion longitudinale de gaine (4A) s'effectue sur plus de 360°.

3. Dispositif selon la revendication 2,
caractérisé en ce que la rotation de l'ensemble d'éclairement (30) et de la caméra (25) autour de ladite portion longitudinale de gaine (4A) s'effectue sur environ 380°.

4. Dispositif selon l'une quelconque des revendications 1 à 3,
caractérisé en ce qu'il comporte un guide tubulaire fixe transparent (20) dans lequel ladite portion longitudinale de gaine (4A) est introduite avec jeu.

5. Dispositif selon la revendication 4,
caractérisé en ce qu'il comporte :
- un bâti fixe (10) ;
- un rotor (15) portant ledit ensemble d'éclairement (30) et ladite caméra (25) et monté à rotation sur ledit bâti fixe (10) à l'aide de paliers de rotation (11) ; et
- des moyens moteurs (16) pour entraîner en rotation ledit rotor (15) par rapport audit bâti (10) ;
- ledit guide tubulaire transparent fixe (20) étant solidaire dudit bâti (10) au niveau desdits paliers de rotation (11).

6. Dispositif selon l'une quelconque des revendications 4 ou 5,
caractérisé en ce qu'il comporte des moyens (22) pour fixer longitudinalement ledit conducteur (3,4) dans ledit tube de guidage (20).

7. Dispositif selon l'une quelconque des revendications 4 à 6, pour un conducteur (3,4) dans lequel lesdits repères (2) sont portés par une portion d'extrémité (1) dudit conducteur (3,4),
caractérisé en ce qu'il comporte au moins un détecteur (23,24) de l'extrémité dudit conducteur (3,4), à l'extrémité dudit guide transparent (20) opposée à celle (21) à travers laquelle est introduit ledit conducteur.

8. Dispositif selon les revendications 6 et 7,
caractérisé en ce que ledit détecteur (23,24) commande lesdits moyens (22) de fixation longitudinale du conducteur dans ledit guide transparent (20).

9. Dispositif selon les revendications 6 et 7,
caractérisé en ce que ledit détecteur (23,24) commande lesdits moyens moteurs (16) pour entraîner en rotation ledit rotor (15).

10. Dispositif selon l'une quelconque des revendications 5 à 9,
caractérisé en ce que la rotation dudit rotor (15) est réversible.

11. Dispositif selon l'une quelconque des revendications 5 à 10,
caractérisé en ce que ladite caméra (25) est reliée à l'extérieur dudit bâti (10) par une liaison filaire (26) suffisamment souple (en 27) pour permettre l'amplitude de rotation de lecture de ladite caméra (25) avec les moyens d'éclairement (30) associés.

## Patentansprüche

1. Vorrichtung zum Lesen von Identifikationsmarkierungen eines elektrischen Leiters (3, 4), die aus wenigstens einer Gruppe von Zeichen (2) bestehen, die hintereinander in Längsrichtung auf der Außenfläche eines sich in Längsrichtung erstreckenden Abschnitts (4A) eines Mantels (4) des elektrischen Leiters angebracht sind, wobei die Vorrichtung einen Beleuchtungsaufbau (30) und eine Kamera (25) aufweist, die fähig ist, das Bild einer Zeile in Längsrichtung der Außenfläche des sich in Längsrichtung erstreckenden Abschnitts des Mantels (4A) zu bilden, wobei die Vorrichtung dadurch gekennzeichnet ist, daß der Beleuchtungsaufbau und die Kamera fähig sind, sich um den sich in Längsrichtung erstreckenden Abschnitt des Mantels (4A) zu drehen, um in Längsrichtung Zeile für Zeile das vollständige Umfangsbild (4AI) der Außenfläche des sich in Längsrichtung erstreckenden Abschnitts des Mantels (4A) zu bilden.

2. Vorrichtung nach Anspruch 1, dadurch gekennzeichnet, daß die Drehung des Beleuchtungsaufbaus (30) und der Kamera (25) um den sich in Längsrichtung erstreckenden Abschnitt des Mantels (4A) über mehr als 360° erfolgt.

3. Vorrichtung nach Anspruch 2, dadurch gekennzeichnet, daß die Drehung des Beleuchtungsaufbaus (30) und der Kamera (25) um den sich in Längsrichtung erstreckenden Abschnitt des Mantels (4A) über etwa 380° erfolgt.

4. Vorrichtung nach einem der Ansprüche 1 bis 3, dadurch gekennzeichnet, daß sie eine transparente, feste, röhrenförmige Führung (20) aufweist, in die der sich in Längsrichtung erstreckende Abschnitt des Mantels (4A) mit Spiel eingeführt wird.

5. Vorrichtung nach Anspruch 4, dadurch gekennzeichnet, daß sie umfaßt:
- einen festen Tragrahmen (10),
- einen Rotor (15), der den Beleuchtungsaufbau (30) und die Kamera (25) trägt und mit Hilfe von Drehlagern (11) drehbar auf dem festen Tragrahmen (10) angebracht ist, und
- Motormittel (16), um den Rotor (15) in bezug auf den Tragrahmen (10) in Drehung zu versetzen;
- wobei die feste, transparente, röhrenförmige Führung (20) in Höhe der Drehlager (11) mit dem Tragrahmen (10) fest verbunden ist.

6. Vorrichtung nach einem der Ansprüche 4 oder 5, dadurch gekennzeichnet, daß sie Mittel (22) aufweist, um den Leiter (3, 4) in der Führungsröhre (20) in Längsrichtung zu fixieren.

7. Vorrichtung nach einem der Ansprüche 4 bis 6 für einen Leiter (3, 4), bei dem die Markierungen (2) von einem Endabschnitt (1) des Leiters (3, 4) getragen werden, dadurch gekennzeichnet, daß sie wenigstens einen Detektor (23, 24) für das Ende des Leiters (3, 4) an dem Ende der transparenten Führung (20) aufweist, das demjenigen (21) entgegengesetzt ist, über das der Leiter eingeführt wird.

8. Vorrichtung nach den Ansprüchen 6 und 7, dadurch gekennzeichnet, daß der Detektor (23, 24) die Mittel (22) zur Fixierung des Leiters in Längsrichtung in der transparenten Führung (20) steuert.

9. Vorrichtung nach den Ansprüchen 6 und 7, dadurch gekennzeichnet, daß der Detektor (23, 24) die Motormittel (16) steuert, um den Rotor (15) in Drehung zu versetzen.

10. Vorrichtung nach einem der Ansprüche 5 bis 9, dadurch gekennzeichnet, daß die Drehung des Rotors (15) umkehrbar ist.

11. Vorrichtung nach einem der Ansprüche 5 bis 10, dadurch gekennzeichnet, daß die Kamera (25) mit dem Raum außerhalb des Tragrahmens (10) durch eine Drahtverbindung (26) verbunden ist, die ausreichend elastisch (bei 27) ist, um die Amplitude der Lesedrehung der Kamera (25) mit den zugehörigen Beleuchtungsmitteln (30) zu gestatten.

## Claims

1. Device for reading the identification marks of an electrical conductor (3, 4), made up by at least one group of signs (2) written longitudinally one after the other on the external surface of a longitudinal portion (4A) of a sheath (4) of said electrical conductor, the device comprising a lighting assembly (30) and a camera (25) which are capable of forming the image of a longitudinal line of the external surface of said longitudinal sheath portion (4A),
the device being characterized in that the lighting assembly and the camera are capable of rotating around said longitudinal sheath portion (4A) in order to form, longitudinal line by longitudinal line, the complete peripheral image (4AI) of the external surface of said longitudinal sheath portion (4A).

2. Device according to Claim 1, characterized in that the rotation of the lighting assembly (30) and of the camera (25) around said longitudinal sheath portion (4A) is performed over more than 360°.

3. Device according to Claim 2, characterized in that the rotation of the lighting assembly (30) and of the camera (25) around said longitudinal sheath portion (4A) is performed over approximately 380°.

4. Device according to any one of Claims 1 to 3, characterized in that it comprises a transparent stationary tubular guide (20) into which said longitudinal sheath portion (4A) is introduced with clearance.

5. Device according to Claim 4, characterized in that it comprises:
- a stationary framework (10);
- a rotor (15) carrying said lighting assembly (30) and said camera (25) and mounted in rotation on said stationary framework (10) with the aid of rotational bearings (11); and
- drive means (16) for driving said rotor (15) in rotation with respect to said framework (10);
- said stationary transparent tubular guide (20) being integral with said framework (10) at said rotational bearings (11).

6. Device according to either of Claims 4 and 5, characterized in that it comprises means (22) for longitudinally fixing said conductor (3, 4) in said guide tube (20).

7. Device according to any one of Claims 4 to 6, for a conductor (3, 4) in which said marks (2) are carried by an end portion (1) of said conductor (3, 4), characterized in that it comprises at least one detector (23, 24) of the end of said conductor (3, 4), at the end of said transparent guide (20) opposite the one (21) through which said conductor is introduced.

8. Device according to Claims 6 and 7, characterized in that said detector (23, 24) controls said means (22) for longitudinally fixing the conductor in said transparent guide (20).

9. Device according to Claims 6 and 7, characterized in that said detector (23, 24) controls said drive means (16) in order to drive said rotor (15) in rotation.

10. Device according to any one of Claims 5 to 9, characterized in that the rotation of said rotor (15) is reversible.

11. Device according to any one of Claims 5 to 10, characterized in that said camera (25) is connected to the outside of said framework (10) by a wire linkage (26) which is sufficiently flexible (at 27) to allow the reading rotational amplitude of said camera (25) with the associated lighting means (30).
